# EUROPÄISCHE PATENTSCHRIFT

(11) **EP 3 535 516 B1**
(45) Veröffentlichungstag und Bekanntmachung des Hinweises auf die Patenterteilung: **25.11.2020**
(21) Anmeldenummer: 17751019.5
(22) Anmeldetag: 11.07.2017
(51) Int. Cl.: F16L 33/035

(54) **SPANNSCHELLE**
BAND CLAMP
COLLIER DE SERRAGE

(30) Priorität: 02.11.2016 WO PCT/EP2016/076366
(43) Veröffentlichungstag der Anmeldung: 11.09.2019
(60) Teilanmeldung: 20201604.4
(73) Patentinhaber: Oetiker Schweiz AG, 8810 Horgen (CH)
(72) Erfinder: HÄNSLI, Willi, 8810 Horgen (CH); DELLER, Rolf, 8800 Thalwil (CH); RICHTER, Steffen, 8952 Schlieren (CH)
(74) Vertreter: Strehl Schübel-Hopf & Partner
(86) Internationale Anmeldenummer: PCT/EP2017/067357
(87) Internationale Veröffentlichungsnummer: WO 2018/082819

(56) Entgegenhaltungen:
- WO-A1-2009/152832
- KR-B1- 101 380 212
- KR-Y1- 200 455 752
- US-A- 4 901 404
- US-A- 5 191 683
- US-A1- 2009 151 133
- US-A1- 2009 172 924
- US-A1- 2015 267 848

## Beschreibung

### Stand der Technik

Aus KR 20-0455752 Y1 ist eine Spannschelle aus einem Klemmband bekannt, deren beide Endabschnitte im geschlossenen Zustand der Spannschelle einander überlappen, wobei der überlappte innere Bandabschnitt zugespitzt ist und in einem am überlappenden äußeren Bandabschnitt vorgesehenen komplementär geformten Zungenkanal eingreift. Bei einer weiteren, aus KR 10-1380212 B1 bekannten Spannschelle sind die Zunge und der Zungenkanal länglich geformt. In beiden Fällen bewirken Zunge und Zungenkanal eine gegenseitige Zentrierung.

Aus der WO 2009/152832 A1 ist eine weitere Spannschelle bekannt. Die Verbindung der beiden Bandenden erfolgt über einen Führungshaken, der am inneren Bandbereich angeordnet ist und in eine Führungsaufnahme am äußeren Bandende eingreift, und einen ebenfalls am inneren Bandbereich vorgesehenen Haltehaken, der in eine Halteaufnahme am äußeren Bandbereich eingreift.

Bei bekannten Spannschellen erfordert die radiale Montage ein Aushängen der Bandenden aus einer typisch vorgesehenen Vorpositionierung. Dies ist nicht einfach, weil die bekannten Spannschellen dafür nicht vorgesehen sind. Außerdem besteht bei bekannten stufenlosen Spannschellen die Gefahr, dass nach der Radialmontage die Stufenlosigkeit nicht mehr gegeben ist, weil die Zunge nicht korrekt im Zungenkanal zu liegen kommt.

### Abriss der Erfindung

Ziel der Erfindung ist es, eine an ihrer Innenfläche stufenlose Spannschelle zu schaffen, die sich nicht nur axial sondern auch radial in einfacher und sicherer Weise montieren lässt.

Dies gelingt mit der vorliegenden Erfindung. Die danach gestaltete Spannschelle ist nicht vorpositioniert und bedarf daher zur Radialmontage nicht eines Aushängens der Bandenden. Die erfindungsgemäße Gestaltung stellt die gewünschte Stufenlosigkeit nach einer radialen Montage sicher. Gleichzeitig bewirkt sie, dass nach einer etwaigen Deformation der Spannschelle, etwa bei Transport und Handling, beim Ansetzen einer Schließzange die Zunge zwangsweise sicher in den Zungenkanal geleitet wird,

Durch die im Folgenden beschriebene Gestaltung der Spannhaken lässt sich die erfindungsgemäße Spannschelle mit handelsüblichen Zangen schließen und auch wieder öffnen. Ferner ist die erfindungsgemäße Spannschelle wiederverwendbar.

In weiterer Ausgestaltung der Erfindung ist die Spannschelle mit einem Toleranzausgleich versehen, so dass sie auch auf harten bis nicht-komprimierbaren Materialien montiert werden kann.

### Zeichnungen

Ausführungsbeispiele der Erfindung werden nachstehend anhand der Zeichnungen näher erläutert. Darin zeigen:
Fig. 1 eine perspektivische Darstellung einer Spannschelle im offenen Zustand,
Fig. 2 und 3 die Spannschelle nach Fig. 1 im geschlossenen und gespannten Zustand, gesehen aus zwei unterschiedlichen Richtungen,
Fig. 4 eine Teilansicht der Spannschelle gemäß einer Variante, im geschlossenen Zustand,
Fig. 5 und 6 Teilansichten weiterer Varianten der Spannschelle, jeweils im geschlossenen Zustand,
Fig. 7 eine Teilansicht der Spannschelle gemäß einer weiteren Variante,
Fig. 8 und 9 eine Seitenansicht und eine perspektivische Darstellung der Spannschelle gemäß weiteren Varianten.

### Ausführungsbeispiele

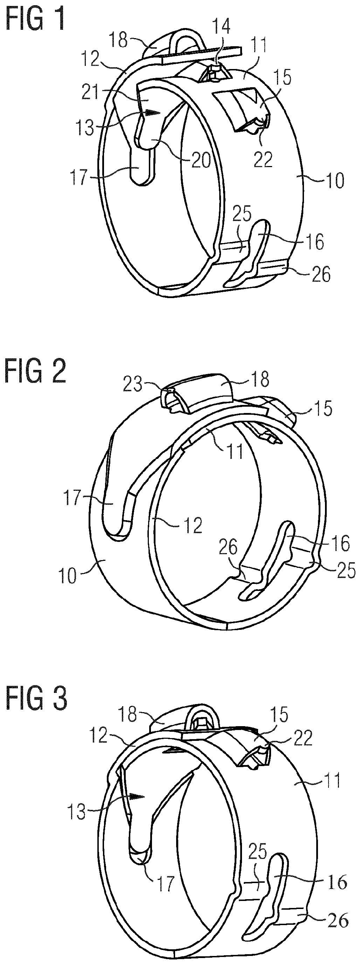

Die in Fig. 1 bis 3 dargestellte Spannschelle besteht aus einem Klemmband **10** mit einander überlappenden Bandabschnitten **11** und **12.** Ausgehend vom dem im Überlappungsbereich inneren Bandabschnitt **11** weist das Klemmband **10** folgende Teile auf: Eine Zunge **13,** einen an der Außenseite des Klemmbandes **10** vorstehenden inneren Einhängehaken **14,** einen ebenfalls nach außen vorstehenden Spannhaken **15,** einen im Umfangsrichtung der Spannschelle verlaufenden Schlitz **16,** einen an der Innenseite des Klemmbandes **10** ausgebildeten Zungenkanal **17** und einen nach außen vorstehenden äußeren Spannhaken **18.**

Die Zunge **13** hat einen gegenüber der vollen Bandbreite schmäleren Endbereich **20** mit parallelen Seitenkanten und verrundeter Spitze und einen trapezförmigen Wurzelbereich **21,** dessen Breite von dem Endbereich **20** auf die volle Klemmbandbreite zunimmt. Der Zungenkanal **17** hat eine zu der Zunge **13** komplementäre Form.

Es hat sich gezeigt, dass die beschriebene Geometrie der Zunge **13** und des Zungenkanals **17** mit einem konischen Wurzelbereich **21** in Kombination mit einem daran anschließenden geraden Endbereich **20** zur einer sehr sicheren automatischen Zentrierung und damit zu der gewünschten Stufenlosigkeit der Innenfläche der Spannschelle führt. Dabei wird die sichere Zentrierung insbesondere durch den konischen Wurzelbereich **21** und die Stufenlosigkeit insbesondere durch den geraden Endbereich **20** gewährleistet.

In dem in Fig. 2 und 3 dargestellten geschlossenen Zustand der Spannschelle greift der (hier nicht sichtbare) Einhängehaken **14** in den Spannhaken **18** ein. Zum Schließen und Spannen der Spannschelle lässt sich diese mit einer Universalzange ergreifen, die an den voneinander abgewandten Enden der beiden Spannhaken **15** und **18** ansetzt. An diesen Enden weisen die Spannhaken **15, 18** jeweils eine in Umfangsrichtung vorspringende Nase **22, 23** auf, um ein Abrutschen der Zange zu vermeiden.

In die Bandteile zwischen dem Schlitz **16** und der jeweiligen Außenkante des Klemmbandes **10** sind Wellen **25, 26** eingeprägt, die Toleranzen zwischen dem Umfang der Spannschelle und dem jeweiligen Abbindgut ausgleichen. Die Wellen **25, 26** sind in Umfangsrichtung gegeneinander versetzt, um eine Rundumabstützung über 360° ohne Unterbrechungen in der Innenfläche der Spannschelle zu erreichen.

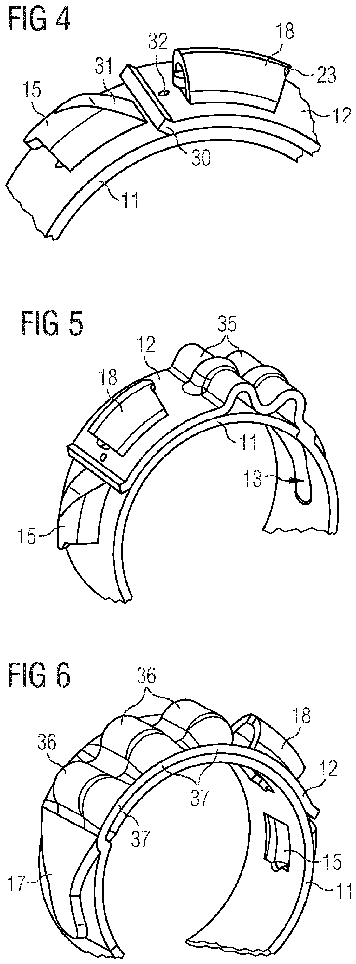

Bei der Gestaltung nach Fig. 4 ist der Endbereich **30** des äußeren Bandabschnitts **12** abgewinkelt und verläuft unter einem Winkel schräg nach außen. Der Spannhaken **15** ist mit einer dem Endbereich **30** zugewandten Schrägfläche **31** versehen, die als Auffahrrampe für den Endbereich **30** beim Schließen und Spannen der Spannschelle dient.

Zwischen dem Endbereich **30** und dem Spannhaken **18** ist in das Klemmband **10** eine nach innen vorstehende Punktsicke **32** eingeprägt, die die Reibung zwischen dem äußeren Bandabschnitt **12** und der Schrägfläche **31** verringert und gleichzeitig den äußeren Bandabschnitt **12** gegen Verformung versteift.

Die Gestaltung der Spannhaken **15** und **18** mit den Nasen **22** und **23** und die Ausbildung der Schrägfläche **31** am Spannhaken **15** in Verbindung mit der Punktsicke **32** und dem abgewinkelten Endbereich **30** am äußeren Bandabschnitt **12** gewährleisten die Wiederverwendbarkeit der Spannschelle.

in dem Ausführungsbeispiel nach Fig. 1 bis 3 ist die Spannschelle mit einem Toleranzausgleich in Form der Wellen **25, 26** versehen. Diese Maßnahme ist nicht bei jeder Spannschelle notwendig; sie kann je nach den Eigenschaften des Abbindegutes zweckmäßig sein.

In dem Ausführungsbeispiel nach Fig. 5 ist die Spannschelle mit Toleranzausgleichswellen **35** versehen, die anders als in Fig. 2 über die gesamte Breite des Klemmbandes **10** durchgehen, jedoch in einem Bereich liegen, der vom inneren Klemmbandabschnitt **11** unterstützt ist. Diese Gestaltung ergibt eine leichtere Verformbarkeit der Spannschelle für weicheres Abbindegut.

In der weiteren Gestaltung nach Fig. 6 sind mehrere wiederum über die gesamte Breite des Klemmbandes **10** durchgehende Toleranzausgleichswellen **36** vorgesehen, die in Radialrichtung derart gewölbt sind, dass ihre Außenkanten **37** im gespannten Zustand der Spannschelle dicht am Abbindegut anliegen. Dadurch wird die Gefahr von Beschädigungen von Elastomermaterialien, etwa Faltenbälgen, bei Kontakt während Bauteilrotationen vermieden. Gleichzeitig ist die Spannschelle gegen Verschmutzung geschützt, was im Extremfall den Toleranzausgleich beeinträchtigen kann.

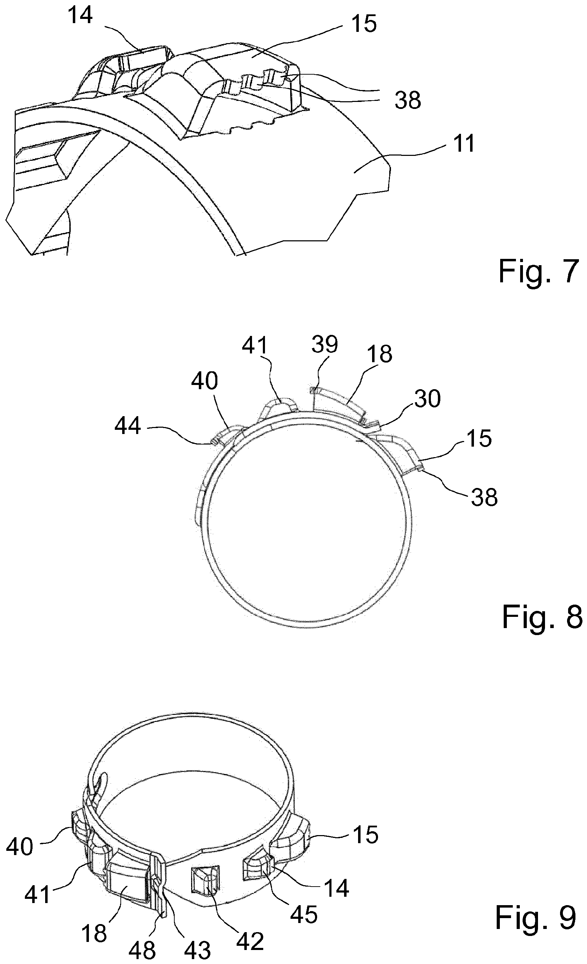

Wie in Fig. 7 gezeigt, kann der auf dem inneren Bandabschnitt **11** angeordnete Spannhaken **15** mehrere, vorzugsweise drei, vom inneren Bandende abgewandte Vorsprünge **38** aufweisen, die ein sicheres Verkrallen des beim Schließen der Spannschelle angesetzten Zangenwerkzeugs und damit ein sicheres Schließen gewährleisten. Ein einzelner Vorsprung wäre nicht nur stärker bruchgefährdet, sondern könnte auch zu einer Drehung der Zangenbacke führen.

In gleicher Weise kann der auf dem äußeren Bandabschnitt **12** angeordnete Spannhaken **18** an seiner vom äußeren Bandende abgewandeten Zangen-Eingriffskante mit mehreren, vorzugsweise drei, Vorsprüngen **39** versehen sein.

Gemäß Fig. 8 und 9 ist auf der vom äußeren Bandende abgewandten Seite des äußeren Bandabschnitts **12** ein Öffnungshaken **40** angeordnet. Mittels eines an dem Spannhaken **15** und dem Öffnungshaken **40** ansetzenden Zangenwerkzeugs lässt sich die geschlossene Spannschelle öffnen. Der Öffnungsvorgang wird durch einen gewölbten Bandteil **41** unterstützt, der zwischen dem Öffnungshaken **40** und dem Spannhaken **18** auf dem äußeren Bandabschnitt **12** angeordnet ist und in den im geschlossenen Zustand der Bandschelle ein auf dem inneren Bandabschnitt **11** ausgebildeter zweiter gewölbter Bandteil eingreift.

Der zweite gewölbter Bandteil ist in der Zeichnung weggelassen. Seine äußere Höhe ist größer als die lichte Höhe des am äußeren Bandabschnitt **12** angeordneten gewölbten Bandteils **41.** Der Höhenunterschied resultiert in einer den Öffnungsvorgang begünstigenden Vorspannung. Ferner ist die dem äußeren Bandende zugewandte Innenfläche des gewölbten Bandteils **41** rampenartig gestaltet.

Die dem Zangen-Eingriff dienende äußere Kante des Öffnungshakens **40** kann ähnlich wie die Kante des Spannhakens **15** mit mehreren, vorzugsweise drei, Vorsprüngen **44** versehen sein.

In der Ausführung gemäß Fig. 9 ist am Ende des äußeren Bandabschnitts **12** eine gegenüber Fig. 4 längere Schrägfläche **48** mit einer Zentrierrille **43** angeformt, in die bei Schließen der Spannschelle ein an dem Einhängehaken **14** ausgebildeter Vorsprung **45** eingreift, um einen Versatz der Spannschelle zu vermeiden. Die Zentrierrille **43** dient gleichzeitig zur Verstärkung der Schrägfläche **48,** um deren Deformation während der Schließbewegung vorzubeugen.

### Bezugszeichen

- **10**: Klemmband
- **11**: Innerer Klemmbandabschnitt
- **12**: Äußerer Klemmbandabschnitt
- **13**: Zunge
- **14**: Einhängehaken
- **15**: Spannhaken
- **16**: Schlitz
- **17**: Zungenkanal
- **18**: Spannhaken
- **20**: Endbereich
- **21**: Wurzelbereich
- **22**: Nase an **15**
- **23**: Nase an **18**
- **25, 26**: Toleranzausgleichswellen
- **30**: Endbereich von **12**
- **31**: Schrägfläche
- **32**: Punktsicke
- **35, 36**: Toleranzausgleichswellen
- **37**: Außenkante
- **38, 39**: Vorsprünge
- **40**: Öffnungshaken
- **41**: Gewölbter Bandteil
- **43**: Zentrierrille
- **44, 45**: Vorsprünge
- **48**: Schrägfläche

## Patentansprüche

1. Spannschelle aus einem Klemmband **(10),** dessen beide Endabschnitte **(11, 12)** im geschlossenen Zustand der Spannschelle einander überlappen, mit einer am überlappten inneren Bandabschnitt **(11)** angeordneten Zunge **(13)** und einem am überlappenden äußeren Bandabschnitt **(12)** vorgesehenen, zur Form der Zunge **(13)** komplementären Zungenkanal **(17)** zur Aufnahme der Zunge **(13), dadurch gekennzeichnet, dass** die Zunge **(13)** einen Wurzelbereich **(21)** aufweist, in dem ihre in Axialrichtung der Spannschelle gemessene Breite von der vollen Klemmbandbreite auf einen geringeren Wert abnimmt, sowie einen an den Wurzelbereich **(21)** anschließenden Endbereich (**20**), in dem ihre Breite konstant den besagten geringeren Wert hat.

2. Spannschelle nach Anspruch 1, wobei auf beiden Bandabschnitten **(11, 12)** jeweils ein Spannhaken **(15, 18)** angeordnet ist und der Spannhaken **(15)** auf dem inneren Bandabschnitt **(11)** eine dem äußeren Bandabschnitt **(12)** zugewandte Schrägfläche **(31)** als Auffahrrampe aufweist.

3. Spannschelle nach Anspruch 2, wobei die Schrägfläche **(31)** eine mit einem Vorsprung **(45)** am Einhängehaken **(14)** zusammenarbeitende Zentrierrille **(43)** aufweist.

4. Spannschelle nach Anspruch 2, wobei der Endbereich **(20)** des äußeren Bandabschnitts **(12)** auswärts abgewinkelt ist.

5. Spannschelle nach einem der Ansprüche 2 bis 4, wobei der äußere Bandabschnitt **(12)** eine nach innen vorspringende Punktsicke **(32)** aufweist.

6. Spannschelle nach einem der vorhergehenden Ansprüche, wobei auf dem inneren Bandabschnitt **(11)** ein Einhängehaken **(14)** zum Eingriff in den auf dem äußeren Bandabschnitt **(12)** angeordneten Spannhaken **(18)** vorgesehen ist.

7. Spannschelle nach einem der vorhergehenden Ansprüche, wobei der den inneren Bandabschnitt **(11)** überlappende Bandbereich eine radial nach außen vorspringende Toleranzausgleichswelle **(36)** aufweist, die in Axialrichtung derart vorgewölbt ist, dass ihre Außenkanten **(37)** im gespannten Zustand der Spannschelle am Abbindegut anliegen.

8. Spannschelle nach einem der Ansprüche 2 bis 7, wobei jeder der Spannhaken **(15, 18)** mehrere, vorzugsweise drei, vom jeweils anderen Spannhaken abgewandte Vorsprünge **(38, 39)** hat.

9. Spannschelle nach einem der vorhergehenden Ansprüche, wobei an den beiden Bandabschnitten **(11, 12)**jeweils ein radial auswärts gewölbter Bandteil **(41)** vorgesehen ist, die im geschlossenen Zustand der Spannschelle ineinander greifen, und wobei der äußere Bandabschnitt **(12)** auf der von seinem Ende abgewandten Seite des gewölbten Bandteil **(41)** einen Öffnungshaken **(40)** trägt.

10. Spannschelle nach Anspruch 9, wobei die äußere Höhe des am inneren Bandabschnitt **(11)** angeordneten gewölbten Bandteils größer ist als die lichte Höhe des am äußeren Bandabschnitt **(12)** angeordneten gewölbten Bandteils **(41).**

11. Spannschelle nach Anspruch 9 oder 10, wobei der Öffnungshaken **(40)** mehrere, vorzugsweise drei, vom Ende des äußeren Bandabschnitts **(12)** abgewandte Vorsprünge **(44)** hat.

## Claims

1. A clamping clip made of a clamping band **(10)** the two end portions **(11, 12)** of which overlap one another in the closed condition of the clamping clip, comprising a tongue **(13)** arranged at the overlapped inner band portion **(11)** and a tongue channel **(17)** provided in the overlapping outer band portion **(12)** and being complementary to the shape of the tongue **(13)** for receiving the tongue **(13), characterized in that** the tongue **(13)** has a root part **(21)** in which the tongue width measured in the axial direction of the clamp decreases from the full clamping band width to a smaller value, and an end part **(20)** adjoining the root part **(21)** in which the tongue width constantly has said smaller value.

2. The clamping clip of claim 1, wherein a tensioning hook **(15, 18)** is arranged on either band portion **(11, 12)** and the tensioning hook **(15)** arranged on the inner band portion **(11)** has an inclined surface **(31)** facing the outer band portion **(12)** as a ramp.

3. The clamping clip of claim 2, wherein the inclined surface **(31)** has a centring groove **(43)** cooperating with a projection **(45)** on the connecting hook **(14).**

4. The clamping clip of claim 2, wherein the end part **(20)** of the outer band portion **(12)** is bent outward.

5. The clamping clip of any of claims 2 to 4, wherein the outer band portion **(12)** has an inward projecting point bead **(32).**

6. The clamping clip of any preceding claim, wherein a connecting hook **(14)** is provided on the inner band portion **(11)** for engagement in the tensioning hook **(18)** arranged on the outer band portion **(12).**

7. The clamping clip of any preceding claim, wherein the band region overlapping the inner band portion **(11)** has a radially outward projecting tolerance compensating wave **(36)** which is curved in the axial direction in such a way that its outer edges **(37)** bear against the object to clamped in the tightened condition of the clamping clip.

8. The clamping clip of any of claims 2 to 7, wherein each tensioning hook **(15, 18)** has a plurality of, preferably three, projections **(38, 39)** each facing away from the respective other tensioning hook.

9. The clamping clip of any preceding claim, wherein a radially outward curved band portion **(41)** is provided on each of the two band portions **(11, 12)** for mutual engagement in the closed condition of the clamping clip, and wherein the outer band portion **(12)** carries an opening hook **(40)** on the side of the curved band portion **(41)** facing away from its end.

10. The clamping clip of claim 9, wherein the outer height of the curved band portion provided on the inner band portion **(11)** is greater than the clear height of the curved band portion **(41)** disposed on the outer band portion **(12).**

11. The clamping clip of claim 9 or 10, wherein the opening hook **(40)** has a plurality of, preferably three, projections **(44)** which face away from the end of the outer band portion **(12).**

## Revendications

1. Collier de serrage constitué d'une bande de serrage (10) dont les deux parties d'extrémité (11, 12) se chevauchent l'une l'autre dans la condition fermée du collier de serrage, comprenant une languette (13) agencée au niveau de la partie intérieure chevauchée de bande (11) et un canal (17) pour languette prévu dans la partie extérieure chevauchante de bande (12) et étant complémentaire de la forme de la languette (13) pour recevoir la languette (13), **caractérisé en ce que** la languette (13) a une partie de racine (21) dans laquelle la largeur de languette mesurée dans le sens axial du collier diminue d'une largeur totale de bande de serrage à une valeur plus petite, et une partie d'extrémité (20) joignant la partie de racine (21) dans laquelle la largeur de languette a de façon constante ladite valeur plus petite.

2. Collier de serrage selon la revendication 1, dans lequel un crochet de mise en tension (15, 18) est agencé sur l'une ou l'autre partie de bande (11, 12) et le crochet de mise en tension (15) agencé sur la partie intérieure de bande (11) a une surface inclinée (31) faisant face à la partie extérieure de bande (12) comme une pente.

3. Collier de serrage selon la revendication 2, dans lequel la surface inclinée (31) a une rainure de centrage (43) coopérant avec une projection (45) sur le crochet de connexion (14).

4. Collier de serrage selon la revendication 2, dans lequel la partie d'extrémité (20) de la partie extérieure de bande (12) est courbe vers l'extérieur.

5. Collier de serrage selon l'une quelconque des revendications 2 à 4, dans lequel la partie extérieure de bande (12) a un bombement (32) se projetant vers l'intérieur.

6. Collier de serrage selon une quelconque revendication précédente, dans lequel un crochet de connexion (14) est prévu sur la partie intérieure de bande (11) pour engagement dans le crochet de mise en tension (18) agencé sur la partie extérieure de bande (12).

7. Collier de serrage selon une quelconque revendication précédente, dans lequel la région de bande chevauchant la partie intérieure de bande (11) a une ondulation (36) de compensation de tolérance se projetant radialement vers l'extérieur qui est incurvée dans le sens axial de telle manière que ses bords extérieurs (37) portent contre l'objet à immobiliser dans la condition serrée du collier de serrage.

8. Collier de serrage selon l'une quelconque des revendications 2 à 7, dans lequel chaque crochet de mise en tension (15, 18) a une pluralité de, préférablement trois, projections (38, 39) faisant chacune face à l'opposé de l'autre crochet de mise en tension respectif.

9. Collier de serrage selon une quelconque revendication précédente, dans lequel une partie de bande (41) incurvée radialement vers l'extérieur est prévue sur chacune des deux parties de bande (11, 12) pour engagement mutuel dans la position fermée du collier de serrage, et dans lequel la partie extérieure de bande (12) porte un crochet d'ouverture (40) sur le côté de la partie de bande (41) incurvée faisant face à l'opposé de son extrémité.

10. Collier de serrage selon la revendication 9, dans lequel la hauteur extérieure de la partie de bande incurvée prévue sur la partie intérieure de bande (11) est supérieure à la hauteur libre de la partie de bande (41) incurvée disposée sur la partie extérieure de bande (12).

11. Collier de serrage selon la revendication 9 ou 10, dans lequel le crochet d'ouverture (40) a une pluralité de, préférablement trois, projections (44) qui font face à l'opposé de l'extrémité de la partie extérieure de bande (12).
